# EUROPÄISCHE PATENTANMELDUNG

(11) **EP 0 631 129 A1**
(43) Veröffentlichungstag der Anmeldung: **28.12.1994**
(21) Anmeldenummer: 94890108.7
(22) Anmeldetag: 21.06.1994
(51) Int. Cl.: G01N 21/88, G01M 11/02

(54) **Verfahren und Vorrichtung zur Prüfung von transparenten Gegenständen**

(30) Priorität: 22.06.1993 AT 1221/93
(71) Anmelder: Österreichisches Forschungszentrum Seibersdorf Ges.m.b.H., A-1010 Wien (AT)
(72) Erfinder: Indra, Michael, Ing., A-1140 Wien (AT); Wallisch, Karl, A-1210 Wien (AT)

(57) **Zusammenfassung**

Verfahren und Vorrichtung zur optischen Prüfung von Gegenständen, Bauteilen und/oder Werkstücken aus bzw. mit transparentem Material, insbesondere von solchen mit Eigenstruktur, vorzugsweise zur Prüfung von Scheinwerfergläsern, wobei die genannten Gegenstände mit Prüflicht durchstrahlt werden und durch Material- und/oder Oberflächen-Inhomogenitäten bzw. -Fehler generiertes, nach Ausblendung von Primärlicht im wesentlichen in Strahlungsrichtung austretendes (vorwärtsgestreutes) Streu- bzw. Beugungslicht unter ortssynchroner Zuordnung zwischen vom Prüflicht jeweils durchsetztem Bereich des Gegenstandes und von einem Photosensor od.dgl. empfangenem Streulicht zur Fehlererkennung und -auswertung herangezogen wird, dadurch gekennzeichnet, daß ein jeweils zu untersuchender Bereich des transparenten Materials des Gegenstandes, Bauteils und/oder Werkstückes mit einem geringe Querschnittsfläche, insbesondere im wesentlichen punktförmigen Querschnitt aufweisenden, bevorzugt parallelgebündelten Prüflicht-, insbesondere Prüflaserstrahl durchstrahlend abgescannt wird.

## Beschreibung

Die vorliegende Erfindung betrifft ein neues Verfahren zur Prüfung von Gegenständen, Bauteilen und/oder Werkstücken aus bzw. mit transparentem Material, insbesondere anorganischem oder organischem Glas, vorzugsweise zur Prüfung von Scheinwerfergläsern, wobei die genannten Gegenstände mit Licht, insbesondere Laser, durchstrahlt werden und durch Material-Inhomogenitäten bzw. -Fehler generiertes, im wesentlichen in Strahlungsrichtung austretendes (vorwärtsgestreutes) Streu- bzw. Beugungslicht zur Fehlerkennung und -auswertung herangezogen wird, sowie Anordnungen bzw. Vorrichtungen, die sich für die Durchführung des neuen Verfahrens besonders eignen.

Es ist eine größere Anzahl an Geräten bekanntgeworden, mit welchen Gegenstands-Oberflächen oder dort angeordnete Muster auf Unregelmäßigkeiten, Materialflächen-Inhomigenitäten oder Fehler optisch überprüft werden können, um z.B. im Zuge eines Produktionsprozesses den Anforderungen, Normen oder Standards nicht entsprechende Werkstücke, Bauteile und/oder Gegenstände vor deren Weiterbearbeitung, Finalisierung, Verpackung, Versand und Vertrieb auszuscheiden.

Es sei dazu nur beispielsweise auf die DE-A1 3 500 332, welche einen Oberflächenprüfungsapparat mit photoelektrischer Umsetzung zur Darstellung eines Bildes eines zu prüfenden nicht-flachen Gegenstandes offenbart, oder auf die JP-Anmeldung 56009717 verwiesen, welche eine optische Filtereinrichtung mit Flüssigkristallen zum Gegenstand hat und deren Zweck eine Verhinderung einer Fehldetektion ohne Minderung der Empfindlichkeit bei Einsatz eines optischen Elementes ist, das durch Einschluß eines Flüssigkristall-Materials zwischen Glaselektroden einfacher Bauart gebildet ist, wobei ein Scan-Lichtstrahl die Oberfläche eines Gegenstandes abrastert und der von der Probe reflektierte Strahl auf ein Raumfilter kondensiert wird, wobei auf Staub oder Fehler zurückgehende Streulicht-Komponenten und durch das optische Element verursachtes Streulicht abgetrennt werden.

Die DE-C2 3 806 209 beschreibt eine aufwendige Vorrichtung zur Erfassung von Strukturdefekten einer Probe mit regelmäßiger Struktur durch räumliches Filtern des von der Probe gebeugten Lichtes, wobei die Probe flächig mit kohärentem Licht bestrahlt oder durchstrahlt wird und mittels Raumfilter ein von einer Probe ohne Strukturdefekte herrührendes Beugungsmuster zur Ausfilterung des von der regelmäßigen Struktur herrührenden Lichtanteiles genutzt wird und das Raumfilter ein photoleitfähiges elektrooptisches Material zum Aufzeichnen des Beugungsmusters der zu untersuchenden Probe in Echtzeit aufweist.

Mit einer Fehlerinspektionseinrichtung Bemäß DE-C2 3 800 053 soll die Erkennung von in einem ebenen, transparenten, platten- oder blattförmigen Material endlicher Dicke vorhandener Fehlerstellen und von deren Lage ermöglicht und erleichtert werden, wobei das Verfahren mit einem scannenden Lichtstrahl arbeitet, der schräg auf die blattförmige Probe auftrifft und von deren Ober- und deren Unterseite wieder schräg reflektiert und mit einem Photodetektor empfangen wird. Dieses Verfahren ist auf praktisch planparallele transparente Gegenstände beschränkt.

Schließlich betreffen die EP-B1 28 774 und 17 371 Geräte zum Nachweis von Fehlern in periodischen Mustern, z.B. in lichtdurchlässigen Gitter- oder Rasterplatten oder einem lichtreflektierenden Muster, wobei die Muster mit kohärentem Licht beleuchtet werden und Fourier-Transformationseinrichtungen zum Transformieren des aus dem periodischen Muster austretenden Lichtes in ein Beugungssignalmuster vorgesehen sind und Filtereinrichtungen räumliche Frequenzen aus der Beugung erster Ordnung blockieren sollen.

Es erfolgt insbesondere gemäß EP-C1 17 371 immer eine optische Fouriertransformation von einwandfrei abbildbaren periodischen Muster. In dem durch die Fouriertransformation entstandenem Muster werden verschiedene Frequenzbereiche ausgeblendet. Zur Ausblendung werden zu den einzeln Mustern gehörige, feste Blenden verwendet. Für die Herstellung einer für die Fouriertransformation geeigneten Abbildung muß der Laserstrahl auf die zu untersuchende Fläche aufgeweitet werden. Das Restlicht wird dort durch eine CPU bewertet und die gerade vermessene Stelle muß von einer Kamera aufgenommen und auf einem Monitor visualiert werden. Ein üblicherweise für die Prüfung von Glasscheiben auf Fehler, wie z.B. Luftblasen, Schlieren, Verschmutzung, Ausbrüche u.dgl. verwendetes Verfahren ist heute das Laserscannen. Dabei wird der Prüfling von einem Laserstrahl abgerastert und die bei Fehlern auftretende Vorwärts- bzw. Rückwärtsstreuung wird detektiert. Sobald der Prüfling jedoch Strukturen aufweist, wie beispielsweise bei Scheinwerfergläsern Zylinderlinsen, versagt dieses Prüf- bzw. Meßverfahren.

Aus der US-PS 4 952 058 ist ein System zur Auffindung von an der Oberfläche befindlichen Fehlern bzw. abnormalen Mustern in einem Oberflächenmuster einer Probe bekanntgeworden, wobei die Probe zur Abtastung mit einem ortsfesten, auf die zu prüfende Oberfläche kondensierten bzw. fokussierten Lichtkegel zur Ausführung eines Scannings mittels steuerbarem Koordinatentisch bewegt wird, das die Probe durchsetzende, vom Fehlmuster od.dgl. gestreute Licht der nullten Ordnung mittels mechanischer, ortsfester Blende ausgeblendet wird und das Streu- bzw. Beugungslicht höherer Ordnung(en) einem Photosensor od.dgl. mit anschließender Signal-Verarbeitungs, -Speicherungs- und -Auswerteeinrichtung zugeführt wird. Besonderer Nachteil des Verfahrens ist neben der mechanisch aufwendigen, hohe Präzision erfordernden, trägheitsbelasteten Scanning-Bewegungsführung der Probe und neben der starren Fokussierung des Prüflichtkegels auf nur eine Ebene des Prüflings,auf welche mit der Koordinatentisch-Höhe jeweils eingestellt wird, wobei aber eine integrale Fehlerauffindung jeweils über die gesamte Materialstärke des Prüflings nicht möglich ist, die oben erwähnte mechanische Blende, welche eine rasche, flexibel steuerbare Anpassung an Lage und Ausdehnung sowie Gestalt eines auszublendenden Querschnitts-Bereiches des den Prüflung durchsetzenden Lichtstromes unmöglich macht.

Die Erfindung hat sich nun die Aufgabe gestellt, ein Verfahren und eine Vorrichtung zu schaffen, welche in Gegenständen aus und mit transparentem Material mit am Gegenstand örtlich stark schwankenden Materialstärken und bzw. an diesem integriert ausgebildeten Strukturen, wie örtlich verschieden ausgerichteten Rippen, Materialverdickungen, Linsen, Kondensoren, Zylinderlinsen u.dgl.,mit hoher Flexibilität und Anpassungsfähigkeit auch geringfügige Materialfehler und -inhomogenitäten, wie oben angeführt, aufzudecken gestatten und somit bei vertretbarem Prüfaufwand eine gleichmäßige, besonders hohe Qualität auch kompliziert geformter, transparenter Gegenstände bzw. Bauteile in einer Serienproduktion zu gewährleisten imstande sind.

Diese Aufgabe wurde gemäß der Erfindung mit einem neuen Verfahren zur optischen Prüfung von Gegenständen, Bauteilen und/oder Werkstücken aus bzw. mit transparentem Material, insbesondere von solchen mit Eigenstruktur, vorzugsweise zur Prüfung von Scheinwerfergläsern, wobei die genannten Gegenstände mit Prüflicht durchstrahlt werden und durch Material- und/oder Oberflächen-Inhomogenitäten bzw. -Fehler generiertes, nach Ausblendung von Primärlicht im wesentlichen in Strahlungsrichtung austretendes (vorwärtsgestreutes) Streu- bzw. Beugungslicht unter ortssynchroner Zuordnung zwischen vom Prüflicht jeweils durchsetztem Bereich des Gegenstandes und von einem Photosensor od.dgl. empfangenem Streulicht zur Fehlererkennung und -auswertung herangezogen wird, gelöst, dessen wesentliche Merkmale darin bestehen,
daß ein jeweils zu untersuchender Bereich des transparenten Materials des Gegenstandes, Bauteils und/oder Werkstückes mit einem geringe Querschnittsfläche, insbesondere im wesentlichen punktförmigen Querschnitt aufweisenden, bevorzugt parallel gebündelten, Prüflicht-, insbesondere Prüflaserstrahl durchstrahlend abgescannt wird,
daß zumindest der primäre Prüf-Lichtstrahl nach Durchsetzen des transparenten Materials mittels trägheitsfreier Ausblendeinrichtung durchstrahlungspositions-synchron zur Gänze ausgeblendet wird,
daß das von Material- und/oder Oberflächen-Inhomogenitäten, und gegebenenfalls Eigenstrukturen des Gegenstandes generierte, im wesentlichen in Richtung des Prüf-Lichtstrahles abgestrahlte, "sekundäre" Streu- und/oder Beugungslicht auf einen Photosensor bzw. -detektor od.dgl. fokussiert bzw. kondensiert wird
und die vom Sensor bzw. Detektor empfangenen bzw. aufgenommenen Streu- und/oder Beugungslicht-Signale mittels, bevorzugt rechnergestütztem, Bildauswertungsverfahren unter strenger örtlicher Zuordnung zwischen dem von Prüflicht-, insbesondere -laserstrahl jeweils durchsetzten Materialbereich des Gegenstandes und empfangenem Streulicht durchstrahlungspositions-sanchron gespeichert und/oder ausgewertet wird.

Beim erfindungsgemäßen Vorschlag wird der Licht- insbesondere Laserstrahl an Materialfehlern im Inneren und/oder an der Oberfläche des transparenten Gegenstandes bzw. auch an Gegenstandsstrukturen gestreut bzw. gebeugt und ergibt am Ort der trägheitsfreien Ausblendeinrichtung eine Strahlaufweitung. Grund für diese neue Vorgangsweise sind neben Einsatz-Anpaßbarkeit die nicht eindeutig als Bild darstellbaren Defektmuster bzw. Fehler, die z.B. von einer wie oben erwähnten Fouriertransformation nicht erfaßt sind.

Das neue Verfahren verwendet bevorzugt einen praktisch Punkt--Querschnitt aufweisenden Strahl, jeweils zu sich parallel geführten Lichts, insbesondere kohärenten Lichtes, wobei eine Verringerung des Prüf-Lichtstrahl-Durchmessers eine Verbesserung der lokalen Auflösung und damit die Detektion besonders kleiner, aber bisweilen dennoch gebrauchsstörender Defekte und Inhomogenitäten ermöglicht.

Besonderer Vorteil des neuen Verfahrens ist die Möglichkeit der integralen Erfassung von Fehlstellen u.dgl. in jeweils dem vom schmalen, an jeder Stelle in gleicher, paralleler Richtung in den transparenten Prüfling eintretenden Strahl durchsetzten Materialbereich und zwar in jeder "Tiefe" des Materials. Damit ist eine materialtiefenabhängige Fokussierung eines kegelig gebündelten Lichtstromes bzw. eine entsprechende Positionierung des Prüflings, wie gemäß der o.a. US-PS 4 952 058 nicht mehr erforderlich.

Ganz wesentlich ist aber im besonderen weiters der Vorteil, daß das neue Verfahren eine praktisch trägheitslose Anpassung der zur Ausschaltung eines unerwünschten Lichtdurchganges bzw. eines ebensolchen Empfangs von Licht am Photosensor vorgesehenen Punkte, Bereiche oder Zonen durch die praktisch immaterielle, hochflexibel beliebig form- und musteranpaßbare Ausblendung zum ersten Mal ermöglicht.

Die schon oben kurz angedeutete Parallelführung der Scanningstrahlen zueinander gemäß **Anspruch 2** bringt den Vorteil einer von Strahlrichtungsbedingungen unabhängigen Information aus allen "Tiefen" der Probe in der jeweils vom Scan-Strahl durchsetzten Position des Prüf-lings.

Höchste Anpassungsfähigkeit und Flexibilität bringt eine vom Licht nach Durchsetzen des transparenten Prüflings beaufschlagte, trägheitslos individuell schaltbare Elemente aufweisende Abblendmatrix gemäß **Anspruch 3**.

Wie schon oben angesprochen, ist es ein besonderes Anliegen der Erfindung, nicht auf eine Prüfung regelmäßig ausgebildeter, womöglich planparallel-scheibenförmiger transparenter Artikel eingeschränkt zu sein, sondern auch in komplex geformten Gegenständen, wie z.B. in Scheinwerfergläsern mit kräftiger Dickenstrukturierung selbst kleine Fehler in jeder Materialtiefenlage auf einmal aufspüren zu können. Dieses Ziel wird mit einer besonders bevorzugten Variante des neuen Verfahrens gemäß **Anspruch 4** erreicht. Durch die Programmierbarkeit der erfindungsgemäß zum Einsatz kommenden, flexibel schaltbaren Ausblendeinrichtung können durch funktionsbedingte, zulässige Glasstrukturen generierte Strahlaufweitungen bzw. Sekundär- bzw. Streulichtstrahlen ausgeblendet werden und nur Aufweitungen von Glasfehlern erreichen den Detektor und werden als solche registriert und ausgewertet. Auf Grund der Programmierbarkeit der Blende ist eine Scan-Bewegung des Laserstrahls bei ruhender Probe besonders bevorzugt. (Scannen würde z.B. beim Verfahren gemäß US-PS 3 952 058 zwar theoretisch auch einsetzbar sein, es ist jedoch dort nur eine feststehende Blende vorgesehen, die dann mechanisch dem Laserstrahl nachgeführt werden müßte, was sehr aufwendig ist). Bei der neuen Methode ist also zwischen dem Prüflung und dem Detektor eine Blende vorgesehen, die den oder die von regelmäßig vorhandenen Strukturen vorwärtsgestreuten Licht-Anteil(e) abschirmt.

Eine eine besonders effektive und hochauflösende, schnelle Fehlererfassung gewährleistende Abtastung des zu prüfenden transparenten Gegenstandes läßt sich bei Einsatz einer bevorzugten Form des neuen Verfahrens gemäß **Anspruch 5** erzielen, da hiebei eine trägheitslose Nachführung der erfindungswesentlichen Ausblendung des primären Prüfstrahls und eventuell auch bekannter, zu erwartender, nicht materialfehler-generierter, also gegenstandsinhärenter "pseudoprimärer" Streustrahlung mit geringem Aufwand ermöglicht wird.

Eine Entsprechung zwischen primärem Prüf-Lichtstrahl und dessen Ausblendung gemäß **Anspruch 6** erspart den Einbau spezieller Primär-Strahl-Korrektur-Einrichtungen und/oder -Programme.

Der Einsatz eines doppelten LCD-Schirms mit synchroner Ansteuerung der beiden Schirmteile ist dann von Vorteil, wenn die Opakisierung eines einzelnen Schirmes nicht ausreichend hoch ist.

Eine direkte Weiterleitung von Fehler-Streulicht vom LCD-Schirm an bzw. in den Licht-Empfangssensor ohne Anordnung einer klassischen Kondensorlinseneinheit ermöglicht eine weitere vorteilhafte Verfahrensvariante gemäß **Anspruch 7**.

Eine weitere moderne Möglichkeit besteht im Einsatz einer voll integrierten Streulicht-Schirm- und -Weiterleitungs-Einheit gemäß **Anspruch 8**. Hiebei sind problemlos alle äußeren Einflüsse, wie z.B. Streuung der Lichtstrahlen nach Durchsetzen des Prüflings an Staubteilchen in der Luft od.dgl. ausgeschaltet.

Wenn ein Blendenschirm gemäß **Anspruch 9** eingesetzt wird, der direkt von der Matrix der prüfgegenstands-seitigen Enden der Fasern bzw. Faserbündel einer Faseroptik gebildet ist, die direkt zum Photodetektor zusammengeführt sind, ist eine weitere Fehlermöglichkeit beim Ausblend- bzw. Lichtweitergabevorgang infolge des Vorhandenseins eines getrennten Blendenschirms vermieden.

Es besteht weiters die elegante Möglichkeit, eine Direkt-Weiterleitung von an Fehlern des Prüflings gestreuten Sekundärlicht vom Blendenschirm an einen Photosensor gleich vom Blendenschirm weg zu vermeiden und dieses Streulicht bei gleichzeitiger strahlsynchroner Ausblendung gleich als elektrisches Signal in die Auswertungs- und Verarbeitungseinrichtung einzubringen, wie dies gemäß **Anspruch 10** vorgesehen ist. Auch dadurch lassen sich die Fehlerprüfung eventuell störende Außeneinflüsse vermeiden.

Um im praktischen Gebrauch durchaus noch unproblematische und absolut noch nicht störende Glasfehler, Schlieren, Abweichungen von Strukturen in Lage und Form u.dgl. beabsichtigt nicht in Fehleranzeigen umzusetzen, die eine Ausscheidung von derartige tolerierbare Fehler aufweisenden transparenten Gegenständen, z.B. Scheinwerfergläser, aus einer Produktionslinie zur Folge hätten, ermöglicht die vorliegende Erfindung infolge der neuartigen Flexibilität bei der Strahlausblendung mittels der praktisch immateriellen Schirme u.dgl. Abblendeinrichtungen auch den integrierten Einbau von ebenso flexiblen Fehlertoleranz-Systemen, die sogar kundenspezifisch, qualitätssicherungsspezifisch usw. innerhalb der Produktion einer Serie gleichartiger Gegenstände wechseln können. Eine derartige Ausführungsvariante besonders vorteilhafter Art ist vom **Anspruch 11** umfaßt.

Das eben im Prinzip erläuterte neue "Fehler-Toleranz-System" kann aber nicht nur sozusagen in den Abblendschirm bzw. in das Lichtempfangssystem (Photosensor) eingebaut sein, vielmehr kann es, wie bei der Methode gemäß **Anspruch 12** vorgesehen, zusätzlich oder alternativ in den Signal-Auswertungs- und Verarbeitungsbereich des neuen Verfahrens integriert sein.

Bei einer Ausführungsform des neuen Verfahrens gemäß **Anspruch 13** kann z.B. auf dem Bildschirm eines Monitors ein bezüglich Fehlerdetektion hochauflösendes Defekt-Streubild des Gegenstandes erhalten werden.

Eine integrale Ausbildung von Streulichtsensor und Speicher, z.B. in Form eines Videosignal-Empfangsspeichers gemäß **Anspruch 14** ermöglicht praktisch eine Echtzeit-Auswertung und -Wiedergabe des jeweiligen "Defekt-Bildes".

Bei einem Vorgehen gemäß der vom **Anspruch 15** umfaßten Variante der neuen Prüfmethode können die bei "schwierig geformten" Gegenständen auftretenden, durch deren Strukturen generierten Streulichtsignale auf elegante Weise kompensiert werden und es bleibt nur ein eindeutiges, entscheidungswesentliches, bloß "defekt-generiertes" Gesamt-Streubild zur Letzt-Beurteilung zurück. Es kann beispielsweise so vorgegangen werden, daß das Helligkeitssignal des Photodetektors in einen Bildspeicher so eingelesen wird, daß mit Hilfe der vom Scanner zur Verfügung gestellten Strahlposition ein Bild des Prüflings mit der jeweiligen lokalen Streuintensität aufgebaut wird. Vor allem im Übergangsbereich von Zylinderlinsen und Planglas eines Scheinwerferglases treten unregelmäßige Streuungen auf, welche sonst mit Blenden nicht ausgeschlossen werden können, diese können jedoch, da sie an bekannten Positionen auftreten, von Bildverarbeitungsmethoden problemlos erkannt und beurteilt werden.

Im speziellen kann dazu eine vorteilhafte Arbeits-Methode gewählt werden, wie sie vom **Anspruch 16** umfaßt ist.

Eine Abstimmung zwischen "Auflösung" innerhalb des rasterdurchstrahlten Volumsquerschnitts-Bereiches des Prüflings und den Streulichtsignal-Empfangs-, Speicher- und Wiedergabe-Medien gemäß **Anspruch 17** hat den Vorteil einer 1:1-Kompatibilität und hoher Einsatzflexibilität des neuen Verfahrens.

Ein besonders rascher Überblick über eventuelle Defekte der Prüflinge läßt sich bei Einsatz einer Variante des erfindungsgemäßen Prüf-Verfahrens gemäß **Anspruch 18** erreichen, was eine eindeutige Entscheidung über ein eventuell notwendiges Ausscheiden von "Defekt-Exemplaren" ebenfalls wesentlich erleichtern kann.

Schließlich ermöglicht eine Vorgehensweise gemäß **Anspruch 19** eine besonders hohe Flexibilität und Anpassungsfähigkeit an jeweils in einem Produktionsbetrieb od.dgl. vorhandene Test- und Untersuchungs-Infrastrukturen.

Es sind dabei mehrere Möglichkeiten offen, wie z.B. ein flächenüberstreichendes Abscannen eines ruhenden Prüflings. In diesem Fall müssen auch die Blende für Primärlicht und gezielt auszuscheidendes Streulicht ständig der Strahlposition des Lasers synchron nachgeführt werden. Eine zusätzliche erste Blende erlaubt das Ausblenden von Bereichen, die nicht von Interesse sind.

Weitere Möglichkeiten sind:

Linienförmiges Abscannen des Prüflings. Dabei bewegt sich der Prüfling in einer Richtung und der Laserstrahl überstreicht z.B. in linearer Bewegung einen eindimensionalen Bereich. Befinden sich am Prüfling Zylinderlinsen mit einer Orientierung anders als senkrecht zur Strahlbewegung, so muß die Ausblendeinrichtung der Strahlposition individuell angepaßt werden oder
punktförmige Abtastung des Prüflings. Dabei bleibt der Laserstrahl unbewegt und der Prüfling wird zweidimensional durch den Laserstrahl bewegt. Die Blende sollte hiebei für die Ausblendung im Normalfall nicht nachgesteuert werden müssen, wohl aber ist das "Eigenstrukturmuster" positions-synchron zu verändern.

Wie oben erwähnt, bildet einen weiteren wesentlichen Gegenstand der Erfindung eine Anordnung bzw. Vorrichtung zur Prüfung von Gegenständen, Bauteilen und/oder Werkstücken aus bzw. mit transparentem Material, insbesondere anorganischem oder organischem Glas, vorzugsweise zur Prüfung von Scheinwerfergläsern, welche sich insbesondere zur Durchführung eines der oben genannten Verfahren gemäß einem der **Anspruch 1** bis **19**, eignet, mit Einrichtung zur Durchstrahlung eines auf Materialinhomogenitäten u.dgl. zu untersuchenden, transparenten Gegenstandes mit kohärentem Licht, insbesondere Laserlicht, Photosensor bzw. -detektor zum Empfang des durch Material-Inhomogenitäten bzw. -Fehler im wesentlichen in Strahlungsrichtung vorwärtsgestreuten Streu- und/oder Beugungslichtes und Einrichtung zur Inhomogenitäts- bzw. Fehler-Erkennung und -Auswertung, wobei die Anordnung im einzelnen dadurch gekennzeichnet ist, daß sie jeweils in Prüf-Lichtstrahlrichtung im wesentlichen in der genannten Reihenfolge hintereinander angeordnet eine Quelle zur Erzeugung eines primären, bevorzugt parallelgebündelten, Prüf-Lichtstrahles, vorzugsweise kohärenten, Lichtes, insbesondere eines Prüf-Laserstrahles, mit geringem, im wesentlichen punktförmigem Strahlquerschnitt,
mindestens eine Einrichtung zur flächig-rasterförmig scannenden Relativ-Bewegung von Prüf-Lichtstrahl und von demselben zu durchsetzendem, transparentem Gegenstand, insbesondere zur scannenden Bewegung des Prüf-Lichtstrahls in zueinander paralleler Strahlrichtung bei ruhendem Gegenstand,
mindestens eine Einrichtung für eine prüfstrahl-positions-synchrone Ausblendung zumindest des primären PrüfLichtstrahles nach dessen Durchgang durch den Gegenstand
mindestens einen Photosensor bzw. -detektor zum Empfang bzw. zur Aufnahme von durch Inhomogenitäten bzw. Fehler im Material des transparenten Gegenstandes generiertem, im wesentlichen in Prüfstrahl-Richtung abgestrahltem, insbesondere vorwärtsgestreutem und/oder -gebeugtem, Sekundär- Licht sowie
mindestens eine mit dem Photosensor verbundene Einrichtung zur Umwandlung, Speicherung, Verarbeitung, Auswertung und/oder Wiedergabe der vom Photosensor bzw. -detektor empfangenen Signale umfaßt.

Die besonders hohe Einsatzflexibilität der neuen Anlage wird besonders vorteilhaft mit einer Anordnung gemäß **Anspruch 21** erzielt.

Andere, ebenfalls an jeweilige Prüfprobleme ohne hohen Aufwand vorteilhaft anpaßbare Systeme im Rahmen der Erfindung sind im **Anspruch 22** niedergelegt.

Eine Parallelisierung des Prüf-Lichtstrahles, wie gemäß **Anspruch 23** vorgesehen, ist aus Gründen der Einfachheit und der eindeutigen Zuordnung der Prüf-Strahlposition beim Scannen einschließlich der Einhaltung hochreproduzierbarer Prüfbedingungen von besonderem Vorteil.

Eine Anordnung in einer Ausführungsvariante, wie sie **Anspruch 24** vorsieht, ist wegen ihrer praktisch unbegrenzten Flexibilität und Anpassungsfähigkeit besonders gut für rasche Produktions- und damit auch Prüf-Umstellungen, wie sie bei heute oft üblicher Kleinserienfertigung für verschiedene, knapp zu beliefernde Auftraggeber notwendig sind, hervorragend geeignet.

Im wesentlichen analoge Vorteile bringt eine Anordnung gemäß **Anspruch 25**.

Eine rasche, primäre Ausblendung und damit einen Ausschluß von nicht interessierenden Bereichen der zu prüfenden transparenten Gegenstände ermöglicht eine vom **Anspruch 26** umfaßte Anordnung.

Bei einer Ausführung der neuen Anordnung gemäß **Anspruch** **27** ist bisher nicht erreichbare, praktisch unbegrenzte Freiheit bei der Lösung auch besonders schwieriger Transparenz-Prüfungs-Probleme gewährleistet.

Mit einer Ausbildungsform gemäß **Anspruch 28** läßt sich eine besonders hohe Empfindlichkeit der neuen Prüf-Anlagen erzielen, und es lassen sich damit auch noch besonders schwache Sekundärlicht-Ausbeuten ergebende, geringfügige, aber z.B. für die Qualität und Langlebigkeit hochbeanspruchter, z.B. hohen Temperaturwechseln ausgesetzter, transparenter Bauteile entscheidende Materialdefekte aufspüren.

Hinsichtlich wirtschaftlich vertretbarer Produktions- und Qualitätssicherung besonders vorteilhafte Ausführungsformen der erfindungsgemäßen Prüfanlage sind schließlich von den **Ansprüchen** **29** und **30** umfaßt.

Die Erfindung wird anhand der Zeichnung näher erläutert.

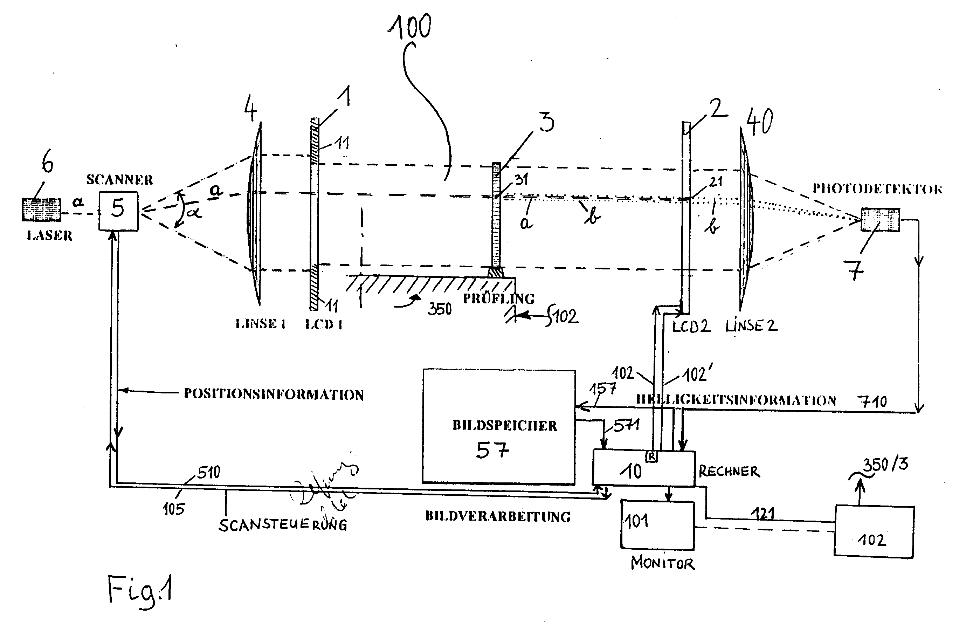

Es zeigen die
Fig.1 eine schematische Übersicht über eine nach dem erfindungsgemäßen Verfahren arbeitende, ebenfalls erfindungsgemäß bevorzugte Prüfanordnung für Scheinwerfergläser,
Fig. 2 schematisch die Zusammenhänge zwischen optischen Strukturen des Prüfungsgegenstandes und einer Kompensation des von denselben generierten, pseudoprimären Streu- bzw. Beugungs-Lichtes und die

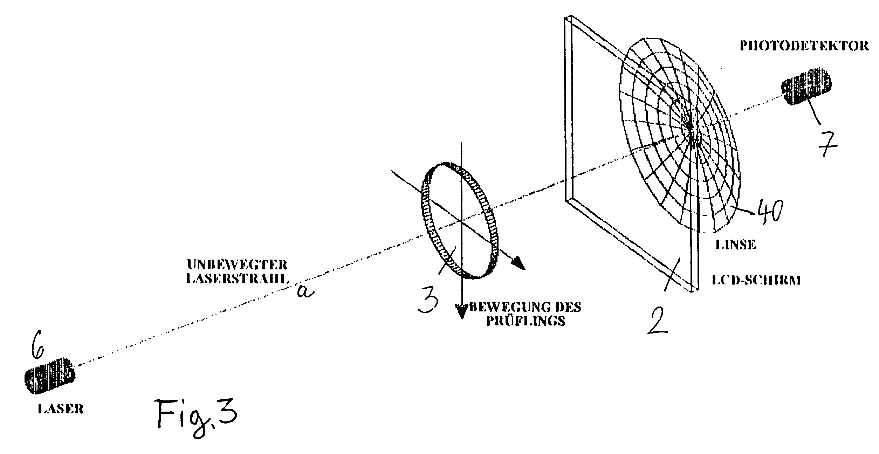

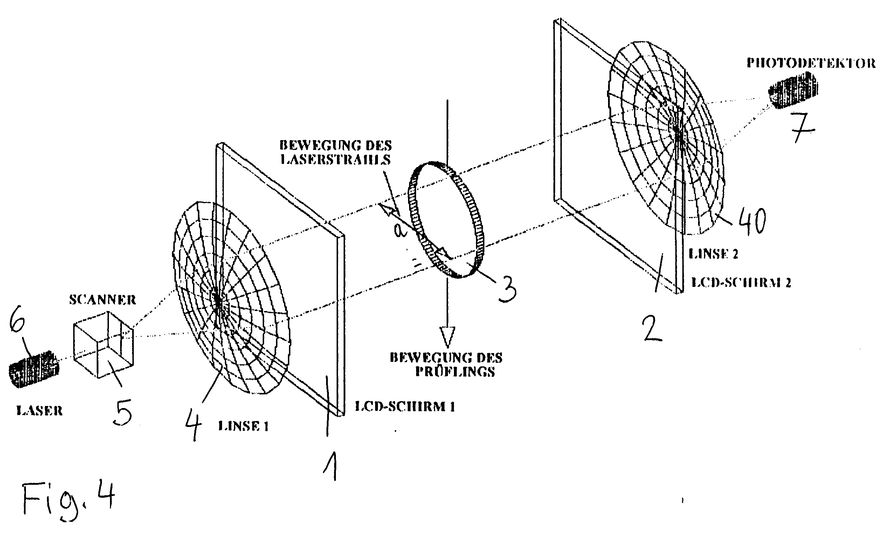

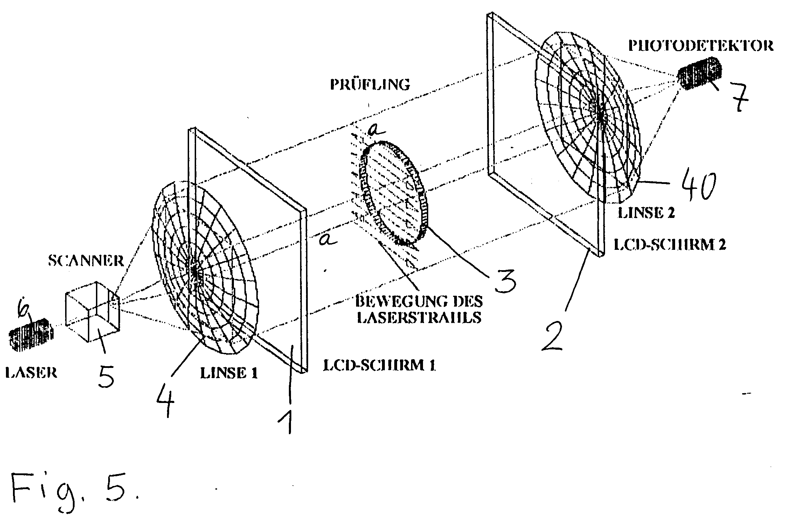

Fig.3 bis 5 anhand von schematischen Schrägansichten 3 Arbeitsweisen zur Erreichung einer exakten Relativbewegung von Prüfstrahl und Prüfling zueinander zum scannenden Abtasten bzw. Durchstrahlen eines transparenten Prüfgegenstandes, wobei einem Scannen bei ruhendem Gegenstand besonderer Vorzug gegeben ist.

In der schematischen Zeichnung einer erfindungsgemäßen Prüfanlage 100 für transparente Gegenstände 3 zur Aufdeckung von qualitätsstörenden Materialinhomogenitäten, wie Bläschen, Schlieren, (Mikro-)Einschlüsse, lokale Trübungen 31 ud.dgl. ist gezeigt, wie ein von einer Prüf-Laserlichtquelle 6 abgestrahlter Laserstrahl a von einem Scanner 5 innerhalb eines Kegelbereiches α, von einer zentralen Rechnereinheit 10 über eine Steuerleitung 105 programmgesteuert, flächenrasternd jeweils gewünschte Scan-Bewegungen durchführt. Der Scan-Strahl a wird mittels ersten Linsensystem 4 in jeder seiner Scan-Positionen zur optischen Achse der Anlage parallel ausgerichtet und durchläuft einen ersten Blendschirm 1, vorzugsweise ein LCD-Schirm, dessen Opakisierungsbereich 11 nicht interessierende Prüfgegenstands-Bereiche vom Scanning gleich ausschließt. Der Prüfungs-Laserstrahl durchsetzt nun den transparenten Prüfling 3, welcher hier einen den Gang des Strahles a behindernden Materialdefekt 31 aufweist, von welchem aus ein den primären Strahl a etwa umgebender, begleitender, sekundärer Streustrahl b ausgeht. Primärstrahl a und Streu- bzw. Beugungsstrahl b gelangen dann zum zweiten LCD-Blendenschirm 2, dessen ebenfalls vom Rechner 10 über Leitung 102 programmsteuerbarer Opakisierungsbereich 21 genau den primären Prüfstrahl a ausfiltert bzw. ausblendet, sodaß nur der sekundäre, materialdefekt-generierte Streustrahl b den Blendenschirm 2 durchsetzt und von einem Linsensystem 4 auf den Photosensor bzw. -detektor 7 gebündelt wird. Anstelle des Linsensystems kann auch eine Faserleit- und -Bündelungsoptik zur Weiterleitung an den Sensor eingesetzt werden oder überhaupt ein elektrisches System.

Die vom Sensor 7 empfangene Strahlung wird in elektrische Signale, insbesondere Helligkeitsinformation, umgewandelt, welche über Leitung 710, 157, vorzugsweise unter Durchlaufen des Rechners 10, ebenfalls vom Rechner aufgrund der ihm vom Scanner 5 über eine Scanner-Positionsinformations-Leitung 510 zukommenden Positionsdaten zukommenden Positionsdaten adreßsteuernd prüfstrahl-positions-synchron getaktet dem Bildspeicher 57 zugeführt und dort bis zum Abruf gespeichert wird.

Von dort werden die präzisen Streustrahl-Helligkeits/Positions-Daten über Leitung 571, vom Rechner 10 abgerufen, beispielsweise dem Monitor 101 zugespielt und ermöglichen dort die Wiedergabe eines präzisen, eventuellen Materialfehlern 31 und deren Position am oder im Gegenstand 3 genau entsprechenden Bildes.

Über eine Leitung 121 kann letztlich eine, z.B. dem Arbeitstisch 350 zugeordnete, Sortiereinrichtung 102 vom Rechner 10 gesteuert werden, mit welcher defekte Prüflinge 3 vor einer weiteren Behandlung für Verpackung, Versand u.dgl. ausgeschieden werden können.

Um insbesondere nicht-planparallele, transparente Gegenstände mit optische Streuung, Brechung oder Beugung verursachenden Strukturen, Rippen, Zylinderlinsen u.dgl.routinemäßig prüfen und untersuchen zu können und entsprechende struktur-generierte "pseudoprimäre" Streustrahlung zu kompensieren, ist im Rechner 10 ein die Streustrahlung eines einwandfreien, mit dem Prüfling außer mit dessen eventuellen Defekten identischen Gegenstandes speichernder Referenzspeicher R enthalten, von welchem aus eine Steuerung einer zur Elimination von gegenstandsstruktur-generierter Streustrahlung vorgesehenen Opakisierung des zweiten Ausblendschirmes 2 über eine Steuerleitung 102' erfolgen kann.

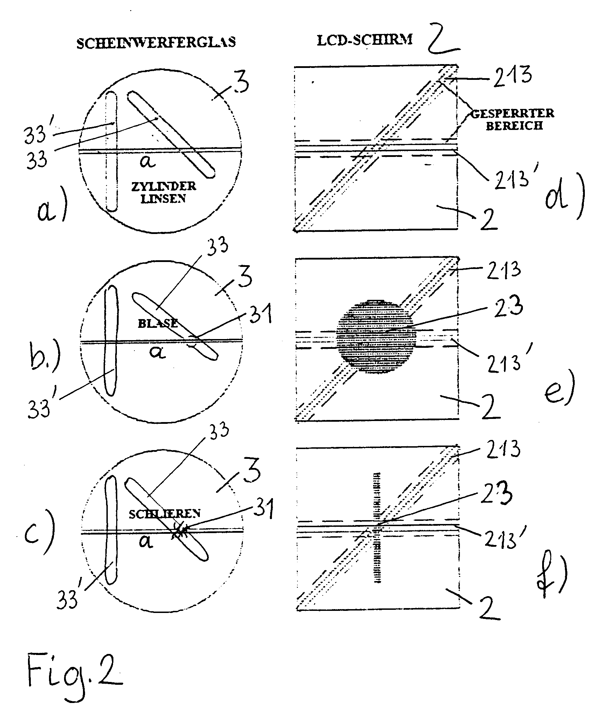

Die Fig.2 zeigt unterschiedliche Streubilder in Abhängigkeit von der Streuursache. Zylinderlinsen 33, 33' weiten den Strahl in einer Ebene auf welche von der Orientierung der Linse abhängt. Da die Lage der Linsen für ein bestimmtes Scheinwerferglas bekannt ist, können im LCD-Schirm 2 diese Bereiche undurchlässig geschaltet werden und nur der verbleibende Teil des Schirms bleibt transparent. Fehlerhafte Stellen streuen jedoch auch außerhalb der gesperrten Bereiche und können problemlos als solche erkannt werden.

Die Fig.2 zeigt konkret linksseitig untereinander schematische Ansichten a bis c von Scheinwerfergläsern 3 mit Zylinderlinsen-Strukturen 33,33', einem Bläschen 31 und Schlieren 31 als "Defekte" und rechtsseitig jeweils untereinander - d) bis f) - die z.B. durch eine programmgesteuerte Opakisierung für den Durchgang eines Primär-Lichtstrahls und strukturgenerierten, "pseudoprimären" Streulichts gesperrten Bereiche 213 und 213' des zwischen Probe und Sensor angeordneten mit Flüssigkristallelementen ausgestatteten, zweiten Ausblendschirmes 2.

Die gesperrten Bereiche 213 und 213' des LCD-Schirmes 2 (Fig. 2d) - f)) korrespondieren mit den durch ihre Struktur dem scannenden, primären Prüf-Laserstrahl a zuzuordnenden, pseudoprimäres Streulicht generierenden Zylinderlinsen 33, 33' der Prüfobjekte 3 der Fig.2a) - c), und sind jeweils etwa rechtwinkelig zu deren Hauptrichtungen ausgerichtet.

Wenn nun der scannende Prüf-Laserstrahl a auf einen sich im Zylinderlinsenbereich befindlichen Materialfehler 31 stößt, so wird, wenn derselbe durch ein etwa rundes Bläschen gebildet ist, etwa durch einen die "transparenzgesperrten" Bereiche 213, 213' weit überragenden, etwa kreisförmigen Streulicht-Kreis 23, wie ihn Fig.2e zeigt, abgebildet, wobei dieser "überragende" Teil des Streulichts schließlich den LCD-Schirm 2 durchsetzt und nach Bündelung aufden Photosensor gelangt, dessen Signale dann in ein "Streulicht-Bild" des "Defektes" übergeführt werden.

Befinden sich im Bereich der Zylinderlinse etwa Schlieren 31 (Fig.2c), so werden diese, wie in Fig. 2f) gezeigt, als - als verbreiterte Linie ausgebildete - Streulichtzone 23 am LCD-Schirm 2 "abgebildet" und gelangen nach dessen Durchsetzung an den Photosensor und schließlich in die demselben nachgeordnete "Defektbild-Auswertung" od.dgl.

## Patentansprüche

1. Verfahren zur optischen Prüfung von Gegenständen, Bauteilen und/oder Werkstücken aus bzw. mit transparentem material, insbesondere von solchen mit Eigenstruktur, vorzugsweise zur Prüfung von Scheinwerfergläsern, wobei die genannten Gegenstände mit Prüflicht durchstrahlt werden und durch Material- und/oder Oberflächen-Inhomogenitäten bzw. -Fehler generiertes, nach Ausblendung von Primärlicht im wesentlichen in Strahlungsrichtung austretendes (vorwärtsgestreutes) Streu- bzw. Beugungslicht unter ortssynchroner Zuordnung zwischen vom Prüflicht jeweils durchsetztem Bereich des Gegenstandes und von einem Photosensor od.dgl. empfangenem Streulicht zur Fehlererkennung und -auswertung herangezogen wird, dadurch gekennzeichnet, daß ein jeweils zu untersuchender Bereich des transparenten Materials des Gegenstandes, Bauteils und/oder Werkstückes mit einem geringe Querschnittsfläche, insbesondere im wesentlichen punktförmigen Querschnitt aufweisenden, bevorzugt parallelgebündelten Prüflicht-, insbesondere Prüflaserstrahl durchstrahlend abgescannt wird,
daß zumindest der primäre Prüf-Lichtstrahl nach Durchsetzen des transparenten Materials mittels trägheitsfreier Ausblendeinrichtung durchstrahlungspositions-synchron zur Gänze ausgeblendet wird,
daß das von Material- und/oder Oberflächen-Inhomogenitäten, und gegebenenfalls Eigenstrukturen des Gegenstandes, generierte, im wesentlichen in Richtung des Prüf-Lichtstrahles abgestrahlte, "sekundäre" Streu- und/oder Beugungslicht auf einen Photosensor bzw. -detektor od.dgl. fokussiert bzw. kondensiert wird
und die vom Sensor bzw. Detektor empfangenen bzw. aufgenommenen Streu- und/oder Beugungslicht-Signale mittels, bevorzugt rechnergestütztem, Bildauswertungsverfahren unter strenger örtlicher Zuordnung zwischen dem vom Prüflicht-, insbesondere -laserstrahl jeweils durchsetztem Materialbereich des Gegenstandes und empfangenem Streulicht durchstrahlungspositions-synchron gespeichert und/oder ausgewertet wird.

2. Verfahren nach Anspruch 1, dadurch gekennzeichnet, daß der Prüflicht-, insbesondere -laserstrahl während des Raster- bzw. Scanvorganges in jeweils zueinander parallelen Bahnen geführt bzw. abgestrahlt werden.

3. Verfahren nach Anspruch 1 oder 2, dadurch gekennzeichnet, daß eine trägheitsfreie Ausblendeinrichtung mit einer Mehrzahl von als Matrix angeordneten, individuell ansteuer- bzw. schaltbaren Lichtempfangs-, transmissions- und/oder -weiterleitungs-Schwächungs- oder Unterdrückungselementen eingesetzt wird

4. Verfahren nach einem der Ansprüche 1 bis 3, dadurch gekennzeichnet, daß - insbesondere zusätzlich zur Ausschaltung des primären Prüflicht-, insbesondere -laserstrahls zur Ausschaltung von auf die Eigenstruktur und/oder Formgebung des zu untersuchenden transparenten Gegenstandes bzw. Gegenstandsbereiches zurückzuführendem Streu- und/oder Beugungslicht bzw. dessen "Muster" eine entsprechende struktur- bzw. strukturmuster-positionssynchrone, gegebenenfalls transmissions-intensitäts-gesteuerte, Ausblendung, insbesondere eine derartige Opakisierung von durch derart struktur-generiertes postprimäres Streu- und/oder Beugungslicht bzw. dessen Muster betroffenen Zonen bzw. Stellen der trägheitslos arbeitenden Ausblendeinrichtung vorgenommen wird.

5. Verfahren nach einem der Ansprüche 1 bis 4, dadurch gekennzeichnet, daß eine Ausblendung des primären Prüflicht-, insbesondere -laserstrahls und gewünschtenfalls des von der Eigenstruktur des transparenten Gegenstandes generierten Streu- und/oder Beugungslichtes bzw. dessen "Musters" mittels durchstrahlungs-positionssynchroner Opakisierung entsprechender, als Matrix angeordneter Einzel-Kristallelemente (Pixel) mindestens eines, bevorzugt eines doppelten, Transmissions-Flüssigkristallschirmes vorgenommen wird.

6. Verfahren nach einem der Ansprüche 1 bis 5, dadurch gekennzeichnet, daß ein Transmissions-Flüssigkristallschirm eingesetzt wird, bei welchem die Flächen der Einzelkristalle (Pixel) der Querschnittsfläche des aus dem zu untersuchenden transparenten Gegenstand nach Durchsetzen desselben ausgetretenen Prüf-Licht-, insbesondere -Laserstrahles entsprechende Dimension und/oder Form aufweisen, vorzugsweise in Dimension und Form mit der genannten Querschnittsfläche übereinstimmen.

7. Verfahren nach Anspruch 5 oder 6, dadurch gekennzeichnet, daß die Weiterleitung und Bündelung von die Einzelkristallelemente (Pixel) des Flüssigkristallschirmes durchsetzendem Streu- bzw. Beugungslicht zum Photosensor mittels Lichtleit- und -bündelungs-Faseroptik vorgenommen wird.

8. Verfahren nach einem der Ansprüche 1 bis 7, dadurch gekennzeichnet, daß eine Ausblendung des primären Prüflicht-, insbesondere -laserstrahls nach Durchsetzen des zu prüfenden transparenten Gegenstandes direkt mittels von einem Abbildungs- bzw. Blendenschirm zum Photosensor bzw. -detektor geführter, faserindividuell schaltbarer Lichtleit- und -bündelungs-Faseroptik vorgenommen wird.

9. Verfahren nach Anspruch 8, dadurch gekennzeichnet, daß ein Abbildungs- bzw. Ausblend-Schirm eingesetzt wird, dessen Matrixelemente direkt durch die Endflächen der individuellen Fasern bzw. Faserbündel der Lichtleit- und -bündelungs-Faseroptik gebildet sind.

10. Verfahren nach einem der Ansprüche 1 bis 4, dadurch gekennzeichnet, daß als trägheitsfreie Ausblendeeinrichtung eine matrixelement-individuell ansteuer- und schaltbare Videosensor-Matrix (CCD-Chip) eingesetzt wird.

11. Verfahren nach einem der Ansprüche 1 bis 10, dadurch gekennzeichnet, daß zur Unterdrückung von an bzw. in den Photosensor bzw. -detektor gelangendem und in der Speicher-, Auswertungs- und Wiedergabe--Einrichtungen zu verarbeitendem Streu- und/oder Beugungslicht von bezüglich Dimension, Form und/oder Lage innerhalb jeweils vorgegebener Toleranzgrenzen liegenden Inhomogenitäten, Fehlern und/oder Eigenstruktur-Abweichungen des zu prüfenden transparenten Gegenstandes eine über die Zahl und/oder geometrische Anordnung bzw. deren "Rand" bzw. "Ränder" der zur jeweiligen Primärstrahl- und Eigenstruktur- generierten Sekundär- bzw. Postprimärstrahlen-Unterdrückung durchstrahlungspositions-synchronen Ausblendung vorgesehenen Ausblend-Elemente bzw. Pixel der Ausblendeinrichtung hinausgehende Anzahl von insbesondere angrenzenden Ausblend-Elementen bzw. -Pixeln, vorzugsweise in einer die eben erwähnte geometrische Anordnung jeweils überschreitenden Anordnung, ebenfalls durchstrahlungspositions-synchron, gegebenenfalls transparenzgrad-gesteuert, opakisiert bzw. lichtundurchlässig geschaltet werden.

12. Verfahren nach einem der Ansprüche 1 bis 11, dadurch gekennzeichnet, daß zur Unterdrückung einer Identifizierung von innerhalb vorgegebener Toleranzgrenzen liegenden Inhomogenitäten und/oder Fehlern als zu berücksichtigende Inhomogenitäten und/oder Fehler und gegebenenfalls einer dadurch bedingten Ausscheidung von innerhalb der genannten Toleranzgrenzen fehlerhaften transparenten Gegenständen die in bzw. an den Photosensor und/oder -detektor von Streu- und/oder Beugungslicht von bezüglich Dimension, Form und/oder Lage innerhalb jeweils vorgegebener Toleranzgrenzen liegenden Inhomogenitäten, Fehlern und/oder Eigenstruktur-Abweichungen des zu prüfenden transparenten Gegenstandes generierten Signale in der Signal-Auswertungs- und -Verarbeitungseinrichtung gemäß einem dieselbe steuernden Fehlerkriteriumsprogramm jeweils durchstrahlungspositions-synchron, gegebenenfalls signalhöhengesteuert, unterdrückt werden.

13. Verfahren nach einem der Ansprüche 1 bis 12, dadurch gekennzeichnet, daß die am bzw. vom Photosensor bzw. -detektor beim durchstrahlenden Scannen des zu prüfenden transparenten Gegenstandes mit dem Prüf--Licht-, insbesondere -Laserstrahl nach dessen positionssynchroner Ausblendung empfangenen und umgewandelten, sequentiellen sekundären Streulicht-Signale einer Streulichtsignal-Speichereinheit zugeführt werden und als dem gescannten Flächenbereich des transparenten Gegenstandes entsprechendes, integrales Streulicht-Gesamt-Muster einer Bild-Auswertungs- und/oder -Wiedergabe-Einheit zugeführt werden.

14. Verfahren nach Anspruch 13, dadurch gekennzeichnet, daß der Photosensor bzw. -detektor selbst als Streulichtsignal-Speicher bzw. Zwischenspeicher-Einheit eingesetzt wird.

15. Verfahren nach einem dere Ansprüche 1 bis 14, dadurch gekennzeichnet, daß im Zuge der Streulicht-Bildauswertung und/oder -wiedergabe die von der Durchstrahlung des transparenten Gegenstandes mit dem Prüf-Laserstrahl stammenden, materialdefekt- und struktur-generierten Streu- und/oder Beugungslichtsignale bzw. ein aus denselben zusammengesetztes Gesamt-Streulicht-Bild mit von einem materialdefektfreien, transparenten Referenzgegenstand stammenden, jeweils entsprechenden Referenz--Streulichtsignalen bzw. mit einem vom genannten Referenzgegenstand stammendem Gesamt-Streulichtbild, bevorzugt etwaige Toleranzvorgaben berücksichtigend, verglichen werden bzw. wird.

16. Verfahren nach einem der Ansprüche 1 bis 15, dadurch gekennzeichnet, daß zur Ausschaltung bzw. Kompensation von auf die Eigenstruktur und/oder Formgebung des auf Materialfehler zu untersuchenden, transparenten Gegenstandes zurückzuführendem postprimärem Streulicht der (Zwischen)Speicher-Einheit und/oder der Bild-Auswertungs- und/oder -Wiedergabe-Einheit ein entsprechendes negatives, bevorzugt etwaige Toleranzvorgaben berücksichtigendes, Referenz-Streulicht-Muster eines fehlerfreien identischen Gegenstandes zugeführt bzw. aufgeprägt wird.

17. Verfahren nach einem der Ansprüche 1 bis 16, dadurch gekennzeichnet, daß eine Streulichtsignal-Speicher- bzw. -Zwischenspeicher-Einheit und/oder -Wiedergabe-Einheit mit einer der Anzahl der beim Laserstrahl-Scannen durchstrahlten Flächen- bzw. Volumselemente des jeweils zu prüfenden Flächenbereiches des transparenten Gegenstandes entsprechenden, vorzugsweise gleichen Zahl an Sensorsignal--Speicherelementen und/oder Bild-Auswertungs- und/oder -Wiedergabe-Elementen (Pixel) eingesetzt wird.

18. Verfahren nach einem der Ansprüche 1 bis 17, dadurch gekennzeichnet, daß mit dem Prüflicht- bzw. -laserstrahl jeweils Flächen- bzw. Volums-Elemente des zu untersuchenden transparenten Gegenstandes durchstrahlt werden, welchen die Dimension und Form der einzelnen Elemente bzw. Bildpunkte der Bild-Auswertungs- und/oder -Wiedergabeeinheit angepaßt ist und daß die mit den jeweiligen Streulicht-Signalen beaufschlagten Einzelelemente bzw. Bildpunkte (Pixel) zu einem Gesamt-Streulicht-Bild zusammengesetzt werden.

19. Verfahren nach einem der Ansprüche 1 bis 18, dadurch gekennzeichnet, daß beim Scannen der Prüf-Licht-, insbesondere Prüf-Laserstrahl und/oder der zu prüfende transparente Gegenstand einem jeweils gewünschten Raster- bzw. Scan-Programm entsprechend relativ zueinander bewegt werden.

20. Anordnung bzw. Vorrichtung zur Prüfung von Gegenständen, Bauteilen und/oder Werkstücken aus bzw. mit transparentem Material, insbesondere anorganischem oder organischem Glas, vorzugsweise zur Prüfung von Scheinwerfergläsern, insbesondere zur Durchführung eines Verfahrens gemäß einem der Ansprüche 1 bis 19, mit Einrichtung zur Durchstrahlung eines auf Material-Inhomogenitäten u.dgl. zu untersuchenden, transparenten Gegenstandes mit kohärentem Licht, insbesondere Laserlicht, Photosensor bzw. -detektor zum Empfang des durch Material-Inhomogenitäten bzw. -Fehler im wesentlichen in Strahlungsrichtung vorwärtsgestreuten Streu- und/oder Beugungslichtes und Einrichtung zur Inhomogenitäts- bzw. Fehler-Erkennung und -Auswertung, dadurch gekennzeichnet,daß sie jeweils in Prüf-Lichtstrahlrichtung im wesentlichen in der genannten Reihenfolge hintereinander angeordnet
eine Quelle (6) zur Erzeugung eines primären, bevorzugt parallelgebündelten, Prüf-Lichtstrahles (a), vorzugsweise kohärenten, Lichtes, insbesondere eines Prüf-Laserstrahles, mit geringem, im wesentlichen punktförmigen Strahlquerschnitt,
mindestens eine Einrichtung (5) zur flächig-rasterförmig scannenden Relativ-Bewegung von Prüf-Lichtstrahl (a) und von demselben zu durchsetzendem, transparentem Gegenstand (3), insbesondere zur scannenden Bewegung des Prüf-Lichtstrahls (a9) in zueinander paralleler Strahlrichtung bei ruhendem Gegenstand (3),
mindestens eine "zweite" Einrichtung (2) für eine prüfstrahlpositions-synchrone Ausblendung zumindest des primären Prüf-Lichstrahles (a) nach dessen Durchgang durch den Gegenstand (3)
mindestens einen Photosensor bzw. -detektor (7) zum Empfang bzw. zur Aufnahme von durch Inhomogenitäten bzw. Fehler (31) im Material des transparenten Gegenstandes (3) generiertem, im wesentlichen in Prüfstrahl-Richtung abgestrahltem, insbesondere vorwärtsgestreutem und/oder -gebeugtem, Sekundär-Licht sowie
mindestens eine mit dem Photosensor (7) verbundene Einrichtung (57,10,101,102) zur Umwandlung, Speicherung, Verarbeitung, Auswertung und/oder Wiedergabe der vom Photosensor bzw. -detektor (7) empfangenen Signale umfaßt.

21. Anordnung nach Anspruch 20, dadurch gekennzeichnet, daß die Einrichtung (2) für eine prüfstrahlpositions-synchrone Ausblendung zumindest des primären Prüf-Lichtstrahles (a) nach Durchgang durch den zu prüfenden Gegenstand (3) mit einer Mehrzahl von als Matrix angeordneten, individuell ansteuer- bzw. schaltbaren Lichtempfangs-, -transmissions- und/oder -weiterleitungs-Schwächungs- oder -Unterdrückungselementen gebildet ist.

22. Anordnung nach Anspruch 20 oder 21, dadurch gekennzeichnet, daß die Ausblend-Einrichtung (2) mit einem Transmissions-Flüssigkristallschirm, gegebenenfalls mit an ihn gekoppelter Lichtleit- und -bündelungs-Faseroptik, mit einer faserindividuell schaltbaren Lichtleit-Faseroptik oder einem matrixpunkt-individuell ansteuerbaren Videosensor gebildet ist.

23. Anordnung nach einem der Ansprüche 20 bis 22, dadurch gekennzeichnet, daß für eine Einhaltung von zueinander paralleler Ausrichtung des flächenraster-scannenden Prüf-Lichtstrahls (a) zwischen Prüf-Strahlquelle (6), bzw. eventueller Scan-Einrichtung (5), und zu untersuchendem, transparentem Gegenstand (3) mindestens eine Sammellinse (4) angeordnet ist.

24. Anordnung nach einem der Ansprüche 20 bis 23, dadurch gekennzeichnet, daß die insbesondere für eine Ausblendung des primären Prüf-Lichtstrahls (a) vorgesehene, Ausblend-Einrichtung (2) mit zumindest einem, vorzugsweise von einem Rechner (10), bezüglich Dimension, Gestalt und Durchlässigkeit(en) gewünschter Flächenbereiche veränderbar, flexibel (an-)steuerbaren Flüssig-Kristall-Schirm gebildet ist.

25. Anordnung nach einem der Ansprüche 20 bis 24, dadurch gekennzeichnet, daß die Ausblend-Einrichtung (2) mindestens eine im wesentlichen im Strahlengang des Prüf-Lichstrahles (a) angeordnete bzw. anordenbare und mit demselben positions-synchron mit- bzw. -nachführbare Blende zur positions-synchronen, gegebenenfalls schwächungs-intensitätssteuerbaren, Ausblendung von durch Formgebung und/oder Strukturen (33,33') des zu untersuchenden, transparenten Gegenstandes (3) generiertem(n), "pseudoprimärem(n)" Streu- und/oder Beugungslicht bzw. dessen "Mustern" (213, 213') aufweist.

26. Anordnung nach einem der Ansprüche 20 bis 25, dadurch gekennzeichnet, daß zur Verhinderung der Generierung von pseudoprimärer Lichtstrahlung aus jeweils nicht interessierenden Bereichen des zu untersuchenden transparenten Gegenstandes (3) zwischen Prüf-Strahl-Quelle (6) und Gegenstand (3) mindestens eine, vorzugsweise hinsichtlich der von ihr abzudeckenden Bereiche flexibel, steuerbare, "erste" Ausblend-Einrichtung (1), insbesondere ein programmsteuerbarer Flüssigkristall-Schirm, angeordnet ist.

27. Anordnung nach einem der Ansprüche 20 bis 26, dadurch gekennzeichnet, daß die Blende zur gegebenenfalls hinsichtlich Transparenz-Schwächungs-Intensitäts steuerbaren, prüfstrahl-positionssynchronen Ausblendung von "pseudoprimären" Streu- und/oder Beugungslicht (b) durch, vorzugsweise von einem Rechner (10) steuerbare, Opakisierungs-Bereiche des "zweiten" Flüssigkeits-Schirmes (2) gebildet ist.

28. Anordnung nach einem der Ansprüche 20 bis 27, dadurch gekennzeichnet, daß, vorzugsweise zwischen Primär-Prüfstrahl-Ausblend-Einrichtung (2) und Photo-Sensor bzw. -Detektor (7), mindestens ein Kondensor (40) oder eine Faseroptik für eine Bündelung der von den Material-Inhomogenitäten (31) des transparenten Gegenstandes (3) generierten sekundären, insbesondere Streu- und/oder Beugungs-Lichtstrahlen (b) angeordnet ist.

29. Anordnung nach einem der Ansprüche 20 bis 28, dadurch gekennzeichnet, daß sie einen mit Zuführ-Einrichtung für die zu untersuchenden, transparenten Gegenstände (3) und einer Abnahme-Einrichtung zur Übernahme und Weitergabe der geprüften Gegenstände ausgestatteten, bewegbaren Arbeitstisch (350), vorzugsweise taktgesteuerten Dreh- bzw. Karusseltisch, umfaßt, auf welchem jeweils eine Mehrzahl der Prüf-Gegenstände (3) positionsgenau anordenbar ist und mittels welchem jeweils mindestens ein Gegenstand (3) in mindestens einen Prüf-Lichtstrahl-, insbesondere -Laserstrahl (a), einbringbar ist.

30. Anordnung nach einem der Ansprüche 20 bis 29, dadurch gekennzeichnet, daß die dem Arbeitstisch (350) nachgeordnete Abnahme-Einrichtung selbst als Sortier-Einrichtung (102) ausgebildet ist oder eine solche aufweist, welche, vorzugsweise von einem Rechner (10) steuerbar, eine Trennung der optisch einwandfreien, insbesondere für Verpackung und Verkauf freigebbaren von den den Prüfkriterien nicht entsprechenden, zurückzuführenden Gegenständen vornimmt.
